# FASCICULE DE BREVET EUROPEEN

(11) **EP 0 739 961 B1**
(45) Date de publication et mention de la délivrance du brevet: **04.11.1998**
(21) Numéro de dépôt: 96400814.8
(22) Date de dépôt: 17.04.1996
(51) Int. Cl.: C09D 133/02, C08F 220/04

(54) **Dispersions de latex à fonction hydroxyle et à fonction carboxylique et leur utilisation pour fabrication des revêtements**
Latexdispersionen mit Hydroxyl- und Carboxylfunktionen und deren Verwendung in der Herstellung von Beschichtigungen
Latex dispersions with hydroxyl and carboxyl functions and their use in the preparation of coatings

(30) Priorité: 28.04.1995 FR 9505123
(43) Date de publication de la demande: 30.10.1996
(60) Demande divisionnaire: 98107203.6
(73) Titulaire: RHODIA CHIMIE, 92408 Courbevoie Cédex (FR)
(72) Inventeur: Joanicot, Mathieu, 92290 Chatenay Malabry (FR); Michael, Theresa, 92300 Levallois Perret (FR); Langlois, Bruno, 91700 Sainte Genevieve des Bois (FR); Richard, Joel, 49160 Blou (FR)
(74) Mandataire: Ricalens, François

(56) Documents cités:
- DE-A- 2 749 691
- FR-A- 2 387 249

## Description

La présente invention a pour objet des dispersions en phase aqueuse susceptibles de former après cuisson des revêtements de qualité qui permettent de réduire et même d'éliminer l'utilisation de solvant(s) dans les peintures.

Dans l'activité des peintures et des vernis, on utilise largement les dérivés alcooliques pour les condenser avec d'autres fonctions et notamment avec des fonctions isocyanates, qu'elles soient masquées ou non. Toutefois à ce jour, deux problèmes restent imparfaitement résolus, à savoir l'utilisation de solvants organiques dont la présence est réputée toxique pour les mammifères supérieurs et néfastes pour l'environnement, et la nécessité de mettre sur le marché des produits non volatils aux températures d'utilisation.

Un autre aspect des problèmes à résoudre dans l'industrie de la peinture et des vernis réside dans le prix souvent élevé de composés présentant des fonctions complexes tels que les isocyanates, masqués ou non.

Toutefois, il est difficile de sortir de ces fonctionnalités complexes car elles induisent des propriétés d'usage souvent remarquables. Il convient de rappeler ici que l'on évalue l'aptitude des compositions à former des peintures ou des vernis d'après les qualités des couches dont elles sont les précurseurs. Parmi les qualités essentielles d'une couche de vernis, il convient de signaler les qualités mécaniques et les qualités de tenue aux solvants. Parmi les qualités mécaniques, la dureté Persoz est un facteur très important. C'est pourquoi, l'un des buts de la présente invention est de fournir des compositions dans lesquelles le principal solvant est constitué par une phase aqueuse.

Un autre but de la présente invention est de fournir une composition qui seule, ou en association avec d'autres, conduise à des revêtements présentant de bonnes qualités mécaniques et notamment une bonne dureté Persoz.

Un autre but de la présente invention est de fournir une composition du type précédent qui présente une bonne résistance aux solvants.

Ces buts, et d'autres qui apparaîtront par la suite, sont atteints au moyen d'une composition utile pour peinture et vernis formée d'une dispersion comportant au moins une phase aqueuse et une population A de particules de (co)polymère(s) dont la taille est comprise entre 10 et 1000 nanomètres, les particules présentant une teneur en fonction acide (avantageusement carboxylique), accessible comprise entre 0,2 et 1,2 et de préférence entre 0,4 et 1 milliéquivalent/gramme de matière solide et présentant une teneur en fonction alcoolique accessible comprise entre 0,3 et 1,5 et de préférence entre 0,4 et 1,2 milliéquivalent/gramme.
Par l'expression "fonction acide" il convient ici de comprendre une fonction chimique qui, à l'état de neutralité électrique, est acide. Ainsi une fonction carboxylique est réputée acide qu'elle soit sous forme acide ou sous forme d'un sel, comme on le verra ci-après. On considère comme accessible les fonctions carboxyliques qui sont au plus à 5 nanomètres de la surface, et les fonctions hydroxyles (alcooliques) qui sont au plus à 10 nanomètres de la surface [interface particule-phase continue (le plus souvent aqueuse) pour les latex]

La concentration en matière solide de ces latex est avantageusement comprise entre 10 et 80 % et de préférence entre 10 et 60% en masse.

Les fonctions acides des particules de la population A sont des préférence des fonctions acides faibles dont le pKa au moins égal à 2, de préférence au moins égal à 3. Parmi les fonctions acides donnant satisfaction, il est préférable d'utiliser des fonctions carboxyliques. Toutefois, on peut envisager d'utiliser des fonctions phosphoniques.

Les fonctions acides sont avantageusement, du moins celles qui sont susceptibles d'échange avec le milieu, sous forme de sels de manière à former des sels facilement dissociables. Parmi les cations donnant satisfaction, on peut citer les alcalins et les alcalino-terreux, notamment ceux des période au moins égale à la 3ème période de la classification périodique des éléments.

Les préférés sont les métaux alcalins et les cations qui leur sont proches. On peut en particulier citer les cations du type ammonium ou phosphonium en particulier les tri- et surtout les tétraalcoylés.

Dans la présente description, les caractéristiques de granulométrie font souvent référence à des notations du type dₙ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse, puisque le poids n'est pas une quantité de matière mais une force) des particules soit inférieur ou égal à la dite taille.

Il peut être souhaitable que la population de ces particules présente une dispersité de la population A ([d₉₀ - d₁₀] / d₉₀) comprise entre 0 et 1/4.

Les polymères de la population A sont en général issus d'une polymérisation entre divers monomères insaturés (insaturation de type éthylénique), avantageusement activée par :
- un monomère indifférent, ou un mélange de monomères, non ionique et ne présentant pas de fonction alcoolique,
- un monomère alcoolique, ou un mélange de monomères, présentant une fonction alcoolique,
- un monomère acide, ou un mélange de monomères, présentant une fonction acide libre ou sous forme de l'un de ses sels.

Comme monomère indifférent, on peut citer : les monomères de type éthylénique dont les principaux paradigmes sont isoprènes, le butadiène 1-3, le chlorure de vinylidène, et l'acrylonitrile ; les monomères de type vinyl aromatique dont on peut citer, à titre paradigmatique, les principaux représentants, à savoir le styrène, le bromostyrène, l'alphaméthylstyrène, l'éthylstyrène, le vinyltoluène, le chlorostyrène ou le vinylnaphtalène ; les monomères de type acrylique, parmi lesquels on peut citer à titre paradigmatique, les esters de l'acide acrylique, méthacrylique et les esters d'acide éthylénique à 4 ou 5 carbones.

Comme monomère alcoolique, on peut citer : les phénols présentant une fonction éthylénique activée par un noyau aromatique, les esters notamment acryliques de polyol notamment de diol dont au moins une des fonctions alcooliques est libre. On peut également citer les amides substituées par un radical alcoyle portant une fonction alcoolique telle que par exemple l'acrylamide de l'éthanolamine.

Comme monomère acide, on peut citer : tous les acides présentant une liaison activée, en particulier les acides de la série acrylique qui peuvent être substitués une ou plusieurs fois sur les atomes de carbone en alpha ou béta de la fonction carboxylique. On peut également envisager des diacides présentant une double liaison activée, comme par exemple les acides fumariques, itaconiques, leurs produits de substitution et leurs isomères. Comme monomère "acide", on peut également, en lieu et place des acides ou de leurs sels, citer les anhydrides symétriques ou dissymétriques internes ou non, des acides précédemment cités.

Il convient également de remarquer qu'un monoester d'un diacide avec un diol dont une seule fonction est estérifiée permet de réaliser le greffage sur le polymère d'une fonction alcoolique avec une fonction acide, et peut donc remplacer les deux monomères cités en dernier, à savoir les monomères alcooliques et les monomères acides.

Il est préférable que les fonctions -ols soient des alcools aliphatiques de préférence primaires.

Ainsi selon la présente invention, il est préférable que les motifs soient issus des monomères explicités ci-dessus.

Il s'ensuit que les particules de (co)polymère(s) sont issues d'une copolymérisation entre au moins un acide libre présentant une liaison éthylénique activée et au moins un alcool libre présentant une fonction éthylénique activée.

A titre illustratif (ou plus précisément de paradigme), on peut plus particulièrement mentionner les (co)monomères suivants :

A titre de monomères vinyliques et acryliques convenant à l'invention, on peut plus particulièrement citer ceux dérivant du styrène, de l'acide acrylique, d'esters acryliques. L'acide méthacrylique, le maléate de monobenzyle, la 2-vinylpyridine, le méthylsulfonate de styrène, le chlorométhylstyrène, l'hydroxypropylméthacrylate, l'hydroxybutylacrylate, l'hydroxyéthylacrylate, l'acrylonitrile et/ou l'acroléine.
Ces monomères sont utilisés seuls ou en mélange entre eux en toute proportion, ou encore en mélange avec un autre monomère copolymérisable choisi parmi ceux précités.

Les particules de polymères peuvent être obtenues par la mise en oeuvre d'une quelconque technique de polymérisation comme la polymérisation en émulsion classique, en microémulsion ou le cas échéant, par polymérisation en milieu organique. Ces techniques familières à l'homme de l'art ne seront pas rappelées ici.
Les particules, constituant le latex porteur de fonction(s) selon l'invention, sont hydrophobes et possèdent avantageusement une taille (d₉₀) généralement comprise entre 0,01 micromètre et 10 micromètres et de préférence au plus égale à 5 micromètres, voire à 2 micromètres. Elles sont calibrées, monodispers(é)es et présentes dans le latex à raison d'une quantité variant entre 0,2 à 65 % en poids du poids total du latex.

La masse moléculaire moyenne en poids (M_{W} déterminée de preférence par chromatographie de perméation de gel, connue sous l'acronyme anglosaxon de "GPC") des polymères constitutifs des particules de la population A est avantageusement comprise entre 5.10⁴ et 5.10⁶, de préférence 0,8 10⁵ et 2.10⁶..

Les fonctions alcooliques ou les fonctions acides, de préférence carboxyliques peuvent être également obtenues par hydrolyse de fonctions alcoologènes (ester, éther, halogénure...) ou de fonctions acidogènes (ester, anhydride, chlorure d'acide, amide, nitrile...).

La répartition entre les différents types de motifs répond avantageusement aux règles suivantes :

La teneur en motif issu du monomère constitué par ledit alcool libre présentant une fonction éthylénique activée, et rapportée à la totalité des motifs de toute sorte, est avantageusement comprise entre 3 et 15 %, de préférence entre 4 et 10 % (mole, ou équivalent).

Selon un mode avantageux de la présente invention, le motif est issu d'un ester, d'un acide alpha éthylénique, avec un diol dont une des fonctions alcool reste non estérifiée. Ledit diol est avantageusement un diol oméga/oméga prime, avantageusement choisi parmi le propane diol-1,3 et le glycol.

Il est souhaitable que ledit acide alpha éthylénique soit un acide acrylique éventuellement substitué.

Selon un mode préféré de la présente invention, la teneur en motif issue d'un acide carboxylique libre (ou sous forme d'un de ses sels), et rapportée à la totalité des motifs de toute sorte, est comprise entre 2 et 10 % (mole).

Pour des raisons économiques, il est souvent avantageux que ledit acide libre soit un acide acrylique éventuellement monosubstitué ou un de ses sels.

Les particules issues de la présente invention peuvent être constituées de deux polymères distincts, le premier constituant le coeur et le second constituant la périphérie. Ce type de particule peut être obtenu par épipolymérisation [où une semence de latex est recouverte par polymérisation superficielle (épipolymérisation, parfois désignée par surpolymérisation)] d'un polymère distinct. Le coeur est parfois appelé germe par analogie au phénomène de cristallisation. Dans ce cas là, seul le deuxième polymère, c'est-à-dire le polymère superficiel, répond aux contraintes de concentration aux différentes fonctions selon la présente invention.

Les latex obtenus peuvent présenter une teneur en émulsifiant(s) au plus égale à 2 %, avantageusement au plus égale à 1 % en masse.

Les compositions selon la présente invention sont en général utilisées avec des isocyanates bloqués ou non. Elles peuvent constituer avec ces isocyanates des compositions complètes dans lesquelles on retrouve les deux fonctions qui se condensent l'une sur l'autre, à savoir les polyols et les isocyanates.

Ainsi, selon la présente invention, les compositions peuvent en outre contenir des isocyanates. Ces isocyanates peuvent soit être solubles et être dissous dans la phase aqueuse, soit, et c'est le cas le plus général, être insolubles auquel cas ils sont avantageusement sous la forme d'une population de particules B porteuses de fonctions isocyanates, le plus souvent masquées. Ces particules sont telles qu'elles forment une émulsion avantageusement monodisperse, et dont la granulométrie et la dispersité sont voisines de celle du latex que l'on veut polycondenser. Les émulsions préférées sont celles qui sont décrites dans la demande de brevet internationale publiée sous le N° 94/22935.

A titre indicatif, pour donner des revêtements de bonne qualité, il est souhaitable que le rapport en masse des populations A et B soit tel que le rapport entre les fonctions alcool et les fonctions isocyanates soit compris entre 0,1 et 10, avantageusement entre 0,3 et 5.

Selon la présente invention, il est particulièrement avantageux d'utiliser pour former des revêtements, des latex porteurs de fonction isocyanate avantageusement bloquée. On peut en particulier citer les latex visés dans la demande de brevet PCT N° WO 94/13712 publié le 23 Juin 1994 sous ce numéro.

Selon la présente invention, les latex ou plus exactement les particules constituant le latex présentent une teneur en fonction isocyanate, de préférence masquée, comprise entre 0,05 et 1 milliéquivalent/gramme et de préférence entre 0,5 et 1 milliéquivalent/gramme de particules de population B.

Selon un mode avantageux de mise en oeuvre de la présente invention, les particules de population A et B sont confondues, en d'autres termes les particules ne forment qu'une seule population et portent les 3 fonctions sur une même particule, à savoir une fonction isocyanate avantageusement bloquée, une fonction alcool et une fonction acide libre ou sous forme d'un de ses sels.

Ainsi, les populations A et B sont confondues pour constituer une population de particules comportant à la fois des fonctions carboxyliques libres, des fonctions alcool libres et des fonctions isocyanates masquées. En ce cas, on obtient des dispersions autoréticulables au niveau des particules, puisque ces dernières contiennent simultanément les fonctions nécessaires à la réticulation.

La présence de fonction carboxylique libre (sous forme acide) ou sous forme de sel donne d'une part une remarquable stabilité physique à la dispersion, et d'autre part favorise de manière significative la formation d'une peinture ou d'un vernis par polycondensation réticulante. Cette propriété est valable pour toute les mises en oeuvre de la présente invention. Si l'on revient aux particules portant simultanément les 3 fonctions mentionnées ci-dessus, on peut noter qu'il est préférable qu'elles répondent, ou du moins leur couche superficielle, aux conditions exposées ci-après :
- le rapport (équivalent) entre les fonctions isocyanates masqués et alcool (NCO/OH) est compris entre 0,1 et 10, de préférence entre 0,2 et 4 ;
- le rapport (équivalent) entre les fonctions alcool et les fonctions carboxyliques (OH/COOH)est compris entre 0,2 et 5 ;
- le rapport (équivalent) entre les fonctions isocyanates et carboxyliques (NCO/COOH) est compris entre 0,1 et 10 de préférence entre 0,2 et 4.

Pour obtenir une bonne stabilité du latex selon la présente invention, il est souhaitable que le potentiel hydrogène, ou pH, soit compris entre 4 et 9, de préférence entre 5 et 8.

Avantageusement, les compositions selon la présente invention présentent tout ou partie d'additifs connus en la matière tels que pigments stabilisants nécessaires à la constitution des vernis et/ou des peintures.

Plus particulièrement, selon cette mise en oeuvre de la présente invention, pour obtenir des résultats satisfaisants, il est souhaitable que la teneur du (co)polymère (latex ou épicouche dans le cas d'une épipolymérisation) en fonction(s) isocyanate(s) bloquée(s) soit au moins égale à 5.10⁻² avantageusement à 0,1 ; de préférence à 0,2 fonction plus préférentiellement 0,3 fonction par kilogramme (équivalents par kilogramme).
Il n'y a pas de limite supérieure sinon économique ; il est toutefois souhaitable que le pourcentage (en masse) du, ou du mélange de, monomère(s) porteur d'isocyanate masqués, ne dépasse pas 75 % de la masse de latex. Il n'y a de limite supérieure qu'économique.

Dans le cas ou l'on utilise un "trimère" de HMDI [HexaMéthylèneDiisocyanate c'est-à-dire OCN-(CH₂)₆-NCO], vendu sous le nom de Tolonate®, avec environ deux fonctions isocyanates masquées par une protection méthyléthylcétoxime et une branche acrylate d'hydroxyéthyle greffée sur la dernière fonction isocyanate, une valeur de 0,1 fonction par kilogramme correspond environ à une incorporation de 5 % en masse du monomère de formule I dans le latex.
Les compositions selon la présente invention peuvent comporter des catalyseurs de démasquage connus en eux-même pour aider au demasquage de la fonction choisie. On peut notamment citer les composés de l'étain et du zinc, tels que dicarboxylate de dialcoylétain, carboxylate de zinc et bétadicétonate d'étain.
Elle peuvent également comprendre une base colorée, notamment du type comportant un pigment et du bioxyde de titane.
Les agents masquants utilisables sont des agents connu en soi, mais qui présentent bien sûr la propriété de former des dérivés stables dans les conditions de synthèse et de conservation des latex. Lorsque l'on choisit l'agent masquant il convient de tenir compte de la propriété surprenante des particules associant fonction acide et alcool selon la présente invention, de libérer les isocyanates à une température plus basse qu'usuellement (environ 20°C en dessous).

Parmi les groupes masquant on peut choisir les groupements à hydrogène mobile dont le pKa est au plus égal à 14, avantageusement à 12, de préférence à 10 et plus préférentiellement 8.

Plus le pKa est élevé, plus il est souhaitable que l'agent masquant soit volatil (sous réserve que ce caractère volatil n'altère les qualités des éventuelles peintures).

Les agents masquant sont choisis de manière que l'émulsion soit stable à sa température de conservation.

Parmi les fonctions chimiques susceptible de masquer les isocyanates on peut citer à titre d'exemples, ou plutôt de paradigmes, les fonctions suivantes :
- les alcools (y compris les vinyliques et les phénols) et les thiols ;
- les oximes (dont la plus courante est la méthyléthylcétoxime, dite "MEKO") ;
- les hydroxylamines ;
- les acides ;
- les amides et notamment les imides ;
- les bétadicétones ;
- les pyrazoles, notamment ceux obtenus par l'action de bétadicétones sur l'hydrazine.

La présente invention se rapporte également à un procédé de préparation de latex porteurs de fonction(s) isocyanate(s) selon les techniques suivantes :
- l'introduction, en cours de polymérisation du ou des monomères(s) constituant les particules du latex, d'un monomère selon l'invention en suspension dans une fraction du ou d'un des monomères et
- épipolymérisation qui consiste en une synthèse du type parfois désignée sous le terme anglo-saxon "core-shell": une semence de latex est épipolymérisée par le(s) (co)monomère(s) en présence d'initiateur et d'un tensioactif. Le monomère selon l'invention, en suspension dans une fraction de (co)monomère(s), est introduit en fin de polymérisation de façon à obtenir des billes de latex, d'une granulométrie précise et resserrée dans lesquelles le monomère selon l'invention est greffé à une distance plus ou moins grande du coeur des particules.

En général, la température de polymérisation est comprise entre 30 et 90°C, avantageusement entre 40 et 80°C. En général, la durée est comprise entre 1 et 10, avantageusement entre 4 et 8 heures.

Après polymérisation, le latex est traité par adjonction d'un système rédox et par distillation, éventuellement sous vide, afin d'en éliminer toute trace de monomères résiduels, puis purifié.

Avantageusement, le polymère constituant le latex contient de 1 à 50 % en poids, avantageusement 3 à 25 % en poids, d'un ou plusieurs des monomères définis dans la demande de brevet PCT N° WO 94/13712.

La présente invention a également pour objet l'utilisation des compositions selon la présente invention pour fabriquer des revêtements.

Elle vise également un procédé de préparation de revêtement, comportant au moins une étape d'application sur un support d'une composition selon la présente invention.

Lorsque lesdites compositions comportent au moins une fonction isocyanate masquée, le procédé comporte une étape ultérieure de cuisson à une température comprise entre 120 et 200°C.

Les exemples non limitatifs suivants illustrent l'invention.

**Example 1 :** Préparation d'un latex de copolymère acrylique carboxylé témoin (T) ne contenant pas de groupements isocyanates bloqués.

Dans une cuve de 15 l, on mélange 2,28 kg d'eau désionisée avec 98 g d'une solution aqueuse de dodécylbenzènesulfonate de sodium (DBS-Na) de concentration 23 % en poids. On introduit dans cette solution et sous agitation le mélange de comonomères acryliques suivants:
- 2,25 kg de méthacrylate de méthyle (MAM),
- 2,025 kg d'acrylate de butyle (ABu),
- 225 g d'acide acrylique (AA),

Le mélange obtenu est émulsifié à l'aide d'un homogénéiseur ULTRA-TURAX (commercialisé par PROLABO) pendant 5 minutes à 20 000 tours/minute. On obtient ainsi une pré-émulsion des monomères acryliques stable dans le temps.

Dans un réacteur de 15 litres en acier inoxydable muni d'un agitateur, on introduit 4 kg d'eau désionisée que l'on porte à 80 °C sous agitation. On ajoute ensuite:
- 250 g de la pré-émulsion préparée ci-dessus,
- 250 g d'une solution aqueuse contenant 13,5 g d'initiateur persulfate d'ammonium.

On attend 15 minutes pour que l'amorçage de la réaction s'effectue, puis on ajoute sur une durée de 4 heures, le reste de la pré-émulsion, soit 6,53 kg. On ajoute ensuite 150 g d'eau et on laisse cuire à 81 °C pendant 1 heure. Puis on refroidit à 60 °C et on ajoute 6,4 g d'hydro peroxyde de tertiobutyle et 2,7 g de Na₂S₂O₅. On maintient la température à 60 °C pendant 30 minutes, puis on refroidit à température ambiante. On neutralise avec une solution de soude diluée à 10 %. On obtient ainsi un latex qui présente les caractéristiques suivantes :
- 39,8 % d'extrait sec massique,
- pH = 7,3,
- viscosité Brookfield RTV-DV 11 (50 t/min) : 25 centipoises,
- taille des particules : 0,435 micromètres,
- taux de grains (mesuré sur filtre 50 µm) : 80 ppm.

**Exemple 2 :** Préparation d'un latex réactif (R) de copolymère acrylique carboxylé contenant 7% en poids du monomère ester acrylique fonctionnel AEHDB porteur de fonctions isocyanates bloquées réactives (2,3 mmoles de NCO réactif par gramme de monomère). le AEHDB est obtenu selon la technique décrite dans la demande de brevet PCT N° WO 94/13712 publiée le 23 Juin 1994 sous ce numéro (par exemple selon l'exemple) par condensation dans l'acrylate de butyle (ABu), de l'hydroxyéthylacrylate avec le trimère HDT partiellement bloqué avec la méthyléthylcétoxime.
Dans une cuve de 15 l, on mélange 2,3 kg d'eau désionisée avec 97,6 g d'une solution aqueuse de dodécylbenzènesulfonate de sodium (DBS-Na) de concentration 23 % en poids. On introduit dans cette solution et sous agitation le mélange de comonomères acryliques suivants :
- 1,93 kg de méthacrylate de méthyle (MAM),
- 2,025 kg d'acrylate de butyle (ABu),
- 225 g d'acide acrylique (AA),
- 524 g d'un mélange de AEHDB/ABu contenant 60 % en poids du monomère fonctionnel (soit 0,72 mole de NCO réactif total).

Le mélange obtenu est émulsifié à l'aide d'un homogénéiseur ULTRA-TURAX (commercialisé par PROLABO) pendant 5 minutes à 20 000 tours/minute. On obtient ainsi une pré-émulsion des monomères acryliques stable dans le temps.

Dans un réacteur de 15 litres en acier inoxydable muni d'un agitateur, on introduit 4 kg d'eau désionisée que l'on porte à 80 °C sous agitation. On ajoute ensuite :
- 200 g de la pré-émulsion préparée ci-dessus,
- 250 g d'une solution aqueuse contenant 13,5 g d'initiateur persulfate d'ammonium.

On attend 15 minutes pour que l'amorçage de la réaction s'effectue, puis on ajoute sur une durée de 4 heures, le reste de la pré-émulsion, soit 6,8 kg. On ajoute ensuite 300 g d'eau et on laisse cuire à 81°C pendant 1 heure. Puis on refroidit à 60 °C et on ajoute 4,5 g d'hydroperoxyde de tertiobutyle et 2,7 g de Na₂S₂O₅. On maintient la température à 60 °C pendant 30 minutes, puis on refroidit à température ambiante. On neutralise avec une solution de soude diluée à 10 %. On obtient ainsi un latex qui présente les caractéristiques suivantes :
- 40,3 % d'extrait sec massique,
- pH = 7,2,
- viscosité Brookfield RTV-DV 11 (50 t/min) : 25 centipoises,
- taille des particules: 0,690 micromètres,
- taux de grains (mesuré sur filtre 50 µm) : 100 ppm.

**Exemple 3 :** Préparation d'un latex (H) de copolymère acrylique carboxylé contenant 5% en poids du monomère ester acrylique hydroxylé (hydroxyéthyl-méthacrylate ou HEMA) porteur de fonctions -OH réticulantes (7,7 mmole de - OH / g de polymère).

On procède exactement de la même façon que dans l'exemple 2, dans les deux étapes de pré-émulsion et de polymérisation, mais avec la composition suivante pour la pré-émulsion des comonomères acryliques :
- 2,2 kg de méthacrylate de méthyle (MAM),
- 2 kg d'acrylate de butyle (ABu),
- 248 g d'acide acrylique (AA),
- 247 g de monomère hydroxyéthylméthacrylate (HEMA).

On obtient ainsi après polymérisation et refroidissement un latex qui présente les caractéristiques suivantes :
- 39,5 % d'extrait sec massique,
- pH = 7,2,
- viscosité Brookfield RTV-DV 11 (50 t/min à 25 °C) : 40 centipoises,
- taille des particules : 0,71 micromètres,
- taux de grains (mesuré sur filtre 50 µm) : 120 ppm.

**Exemple 4 :** Préparation d'un latex auto-réticulable (AR1) de copolymère acrylique carboxylé contenant à la fois 5% en poids du monomère ester acrylique hydroxylé (hydroxyéthylméthacrylate ou HEMA) porteur de fonctions OH réticulantes (7,7 mmole de-OH / g de monomère), et 7% en poids du monomère ester acrylique fonctionnel AEHDB porteur de fonctions isocyanates bloquées réactives (2,3 mmoles de NCO réactif par gramme de monomère).

On procède exactement de la même façon que dans les exemples 2 et 3, dans les deux étapes de pré-émulsion et de polymérisation, mais avec la composition suivante pour la pré-émulsion des comonomères acryliques :
- 2 kg de méthacrylate de méthyle (MAM),
- 1,66 kg d'acrylate de butyle (ABu),
- 235 g d'acide acrylique (AA),
- 235 g de monomère hydroxyéthylméthacrylate (HEMA).
- 548 g d'un mélange de AEHDB/ABu contenant 60 % en poids du monomère fonctionnel (soit 0,75 mole de NCO réactif total).

On obtient ainsi après polymérisation et refroidissement un latex qui présente les caractéristiques suivantes :
- 40,4 % d'extrait sec massique,
- pH = 7,2,
- viscosité Brookfield RTV-DV 11 (50 t/min à 25 °C) : 43 centipoises,
- taille des particules : 0,830 micromètres,
- taux de grains (mesuré sur filtre 50 µm) : 150 ppm.

**Exemple 5 :** Préparation d'un latex auto-réticulable (AR2) de copolymère acrylique contenant à la fois 10 % en poids du monomère ester acrylique hydroxylé (hydroxyéthylméthacrylate ou HEMA) porteur de fonctions -OH réticulantes (7,7 mmole de-OH / g de monomère), et 7% en poids du monomère ester acrylique fonctionnel AEHDB porteur de fonctions isocyanates bloquées réactives (2,3 mmoles de NCO réactif par gramme de monomère).

On procède exactement de la même façon que dans les exemples 2 et 3, dans les deux étapes de pré-émulsion et de polymérisation, mais avec la composition suivante pour la pré-émulsion des comonomères acryliques :
- 1,93 kg de méthacrylate de méthyle (MAM),
- 1,50 kg d'acrylate de butyle (ABu),
- 235 g d'acide acrylique (AA),
- 470 g de monomère hydroxyéthylméthacrylate (HEMA).
- 548 g d'un mélange de AEHDB/ABu contenant 60 % en poids du monomère fonctionnel (soit 0,75 mole de NCO réactif total).

On obtient ainsi après polymérisation et refroidissement un latex qui présente les caractéristiques suivantes:
- 40,5 % d'extrait sec massique,
- pH = 7,4,
- viscosité Brookfield RTV-DV 11 (50 t/min à 25 °C) : 46 centipoises,
- taille des particules: 0,650 micromètres,
- taux de grains (mesuré sur filtre 50 µm): 150 ppm.

**Exemple 6:** Formulations et évaluation des vernis formulés à partir des dispersions aqueuses des polymères T, R, H, ARI, AR2.

### a).Formulations : les latex préparés dans les exemples 1 à 5 précédents sont introduits dans les formulations de vernis suivantes :

| **N° Formulation** | **Compositions des formulations de vernis** |
|---|---|
| 1 | Latex T (0,70 méq COOH / g de vernis) |
| 2 | Latex T + émulsion de TOLONATE bloqué(*) (0.55 méq COOH + 0,85 méq NCO réactif / g de vernis) |
| 3 | Latex R 0,70 méq COOH + 0,16 méq NCO (réactif / g de vernis) |
| 4 | Latex H (0,70 méq COOH + 0,38 méq OH / g de vernis) |
| 5 | Latex H + émulsion de TOLONATE bloqué(*) (0,55 méq COOH + 0,31 méq OH + 0,85 méq NCO réactif /g de vernis) |
| 6 | Latex AR 1 (0,70 méq COOH + 0,38 méq OH + 0,16 méq NCO réactif /g de vernis) |
| 7 | Latex AR2 (0,70 méq COOH + 0,76 méq OH + 0,16 méq NCO réactif /g de vernis) |

| | |
|---|---|
| (*) Dans les formulations 2 et 5, on a introduit 25 % en poids de TOLONATE HDT bloqué (méthyléthylcétoxime ou MEKO), sous forme d'une émulsion aqueuse, d'extrait sec massique 80 %, de diamètre moyen 1 µm, stabilisée avec un tensio-actif non ionique (nonylphénolpolyoxyéthyléné de type Antarox 461 P). | |

Les valeurs d'usage de ces formulations aqueuses sont comparées entre elles, et certaines sont comparées à celles que l'on obtient avec une formulation de base (B) en milieu solvant : TOLONATE HDT bloqué + polyol SYNAQUA 3510 WL (rapport NCObloqué/ OH = 1) après cuisson à 160 °C pendant 30 min.

### b) Méthodes d'évaluation

* L'aspect de certains vernis a été évalué par formation de films sur des plaques de verre, sous une épaisseur humide de 100 µm. Le séchage des films a lieu pendant 8 heures à température de 50 °C. Puis une cuisson est pratiquée pendant 1 heure à 160 °C. On évalue le caractère diffusant ou homogène transparent des films ainsi formés.
* Les mesures de dureté Persoz sont effectuées, grâce au pendule d'évaluation de dureté Gardco HA 5854 (nombre d'oscillations), sur des vernis déposés sur une plaque d'aluminium, sous une épaisseur humide de 300 µm. Le séchage des films a lieu pendant 8 heures à une température de 50 °C. Puis une cuisson est pratiquée pendant 30 minutes à 140 °C. Les vernis obtenus sont ensuite refroidis à 25°C et caractérisés grâce au pendule Persoz dont on mesure le nombre d'oscillations. Les vernis sont également caractérisés en dureté Persoz avant cuisson des échantillons (uniquement séchage à 50° C). Des mesures de dureté Persoz sont aussi effectuées sur certains échantillons de vernis préparés sur supports de verre (voir ci-dessus).
* La reprise d'eau et le gonflement en solvant (mélange tétrahydrofurane/méthyléthylcétone en proportions 90/10) sont évalués par une méthode de pesée d'échantillons de films épais (1mm) préparés par déshydratation des formulations dans des moules silicones selon le même processus que celui décrit ci-dessus (séchage des films pendant 8 heures à 50 °C, puis cuisson pendant 30 minutes à 140 °C).

Les manipulations de reprise d'eau et de gonflement sont effectuées à température ambiante. La reprise d'eau est exprimée, sous la forme de la variation de poids de l'échantillon, en pourcentage massique d'eau absorbée à l'équilibre (environ 4 heures). Le gonflement est exprimé sous la forme du rapport du poids de l'échantillon gonflé par le solvant à l'équilibre (environ 4 heures), au poids du même échantillon sec.
* L'allongement et la contrainte à la rupture sont évalués grâce à une machine de traction (Adamel-Lhomargy DY 15) sur des éprouvettes de films de largeur 4 mm et de longueur 10 mm, préparées par déshydratation des formulations dans des moules silicones selon le même processus que celui décrit ci-dessus (séchage des films pendant 8 heures à 50 °C, puis cuisson pendant 30 minutes à 140 °C). L'allongement à la rupture est exprimé en pourcentage de la longueur initiale de l'échantillon et la contrainte à la rupture en MPa.
* Le module d'Young des vernis est mesuré à partir de la pente à l'origine des courbes de traction (machine de traction Adamel-Lhomargy DY 15), qui représentent la contrainte appliquée en fonction de l'allongement du film.
* La cinétique de réticulation des vernis est étudiée en régime de petites déformations (amplitude < 0,3 %) par la méthode d'analyse mécanique dynamique (AMD) sur des films d'épaisseur 0,5 mm, de largeur 4 mm et de longueur 10 mm à 25 °C sur l'appareil Perkin-Elmer DMA 7. Les éprouvettes sont préparées par déshydratation des formulations dans des moules silicones selon le même processus que celui décrit ci-dessus (séchage des films pendant 8 heures à 50°C). Puis l'évolution du module élastique E' en fonction du temps est suivie par AMD pendant la cuisson des vernis à 160 °C.

### Exemple 7.:

Comparaison des performances des vernis formulés, déterminées selon les protocoles expérimentaux décrits dans l'exemple 6.

### a) Caractéristiques mécaniques:

| **N° Formulation** | **Dureté Persoz (sur Al) (n.o.*) avant cuisson (140°C)** | **Dureté Persoz (sur Al) (n.o.*) après cuisson (140°C)** | **Dureté Persoz (sur verre) (n.o.*) après cuisson (160°)** | **Allongement rupture (%) après cuisson (140°C)** | **Contrainte rupture (MPa) après cuisson (140°C)** | **Module d'Young (GPa) après cuisson (140°C)** |
|---|---|---|---|---|---|---|
| B | - | - | 428 | | - | - |
| 1 | 170 | 170 | 230 | 340 | 85 | 15,5 |
| 2 | 120 | 180 | - | 445 | 45 | 2 |
| 3 | 120 | 130 | - | - | 75 | 7 |
| 4 | 145 | 170 | 370 | 340 | 105 | 15,5 |
| 5 | 150 | 185 | - | 205 | 50 | 13 |
| 6 | 180 | 200 | 415 | 340 | 85 | 11 |
| 7 | - | - | 480 | - | - | - |

La formulation 6 fournit la dureté Persoz la plus élevée sur métal. Elle présente également une dureté Persoz très élevée sur verre, et équivalente à celle que fournit le système en phase solvant. La formulation 7 conduit à une dureté Persoz supérieure à celle du système solvant, sur verre. Les contraintes à la rupture les plus élevées (> 70 MPa) sont obtenues avec les systèmes à base de latex seuls (de type R,H, ou AR) pour lesquels l'ensemble des fonctions (-COOH, -OH et -NCO) sont contenues dans une seule particule. Dans les vernis à base de mélanges de latex et d'émulsion Tolonate, un module d'Young élevé peut néanmoins être obtenu si le latex est hydroxylé (formulation 5 avec latex H). Les vernis à base de latex H et AR permettent d'obtenir des performances mécaniques élevées (contrainte à la rupture, module d'Young, dureté Persoz sur verre) sans diminution significative de l'allongement à la rupture (souplesse).

### b) Tenue au solvant et à l'eau - Aspect des vernis.

| **N° Formulation** | **Reprise d'eau (%) après cuisson (140°C)** | **Gonflement en solvant après cuisson (140°C)** | **Aspect des vernis sur verre après cuisson (160°C)** |
|---|---|---|---|
| 1 | 0,2 | 11 | Film transparent |
| 2 | 1 | 8 | Film transparent (léger jaunissement) |
| 3 | 5 | 2 | Film transparent |
| 4 | 15 | 5,5 | Film diffusant trouble |
| 5 | 2 | 3 | Film transparent (léger jaunissment) |
| 6 | 10 | 2 | Film homogène transparent, clair |
| 7 | - | - | Film homogène, transparent, clair |

Les formulations 3, 6, et 5 fournissent les meilleurs compromis de propriétés. Une teneur ajustée en fonctions NCO réactives permet d'améliorer fortement la résistance à l'eau des vernis obtenus (formulation 5).

**Exemple 8.:** Comparaison de la réactivité (cinétique de réticulation à 160 °C) des formulations 5 et 6.

L'évolution du module élastique des vernis issus des formulations 5 et 6 est suivie par AMD en fonction du temps selon le protocole expérimental décrit dans l'exemple 6. Les résultats sont présentés dans le tableau ci-dessous :

| **N° Formulation** | **Module élastique des vernis (E' x 10**^{**5**} **Pa)** | | | | | | | |
|---|---|---|---|---|---|---|---|---|
| | **Temps de cuisson à 160° C(min)** | | | | | | | |
| | 6 | 12 | 25 | 50 | 75 | 100 | 200 | 400 |
| 5 | 1,5 | 2 | 3 | 5 | 6 | 7 | 10 | 20 |
| 6 | 4 | 6 | 7,5 | 9 | 9,5 | 10 | 10 | 10 |

La cinétique de réticulation des systèmes des vernis auto-réticulables (à base de latex AR 1 ) est plus rapide que celle des mélanges latex H + émulsion Tolonate. Cependant, ce dernier système présente une aptitude à la réticulation plus importante après un temps de cuisson convenable (densité de réticulation plus élevée et module élastique plus élevé).

## Revendications

1. Composition utile pour peinture et vernis formée d'une dispersion comportant au moins une phase aqueuse et une population A de particules de (co)polymère(s) dont la taille est comprise entre 10 et 1000 nanomètres, caractérisée par le fait que les particules présentent une teneur en fonction acide (avantageusement carboxylique), accessible comprise entre 0,2 et 1,2 milliéquivalent/gramme de matière solide et qu'elles présentent une teneur en fonction alcoolique accessible comprise entre 0,3 et 1,5 milliéquivalent/gramme.

2. Composition selon la revendication 1., caractérisée par le fait que la teneur en particules de latex est comprise entre 10 et 80 % avantageusement entre 10 et 60% en masse.

3. Composition selon les revendications 1. Et 2., caractérisée par le fait que les fonctions acides des particules de la population A sont des fonctions acides faibles dont le pKa est au moins égal à 2, de préférence à 3.

4. Composition selon les revendications 1. A 3., caractérisée par le fait que la dispersité de la population A ([d₉₀ - d₁₀] / d₉₀) est comprise entre 0 et 1/4.

5. Composition selon les revendications 1. A 4., caractérisée par le fait que les particules de (co)polymère(s) sont issues d'une copolymérisation entre au moins un acide libre présentant une liaison éthylénique activée et au moins un alcool libre présentant une fonction éthylénique activée.

6. Composition selon les revendications 1. A 5., caractérisée par le fait que la masse du (co)polymère est comprise entre 5.10⁴ et 5.10⁶.

7. Composition selon les revendications 5. A 6., caractérisée par le fait que ledit alcool libre présentant une fonction éthylénique activée est un diol monoestérifié par un acide alpha éthylénique.

8. Composition selon les revendications 1. A 7., caractérisée par le fait que la teneur en motif issu du monomère constitué par ledit alcool libre présentant une fonction éthylénique activée est comprise entre 3 et 15 % avantageusement entre 4 et 10 %.

9. Composition selon les revendications 7. Et 8., caractérisée par le fait que ledit diol est un diol oméga/oméga prime, avantageusement choisi parmi le propane diol-1,3 et le glycol.

10. Composition selon les revendications 7. A 9., caractérisée par le fait que ledit acide alpha éthylénique est un acide acrylique éventuellement substitué.

11. Composition selon les revendications 5. A 10., caractérisée par le fait que ledit acide libre est un acide acrylique éventuellement monosubstitué ou un de ses sels.

12. Composition selon les revendications 5. A 11., caractérisée par le fait que la teneur en motif issue d'un acide carboxylique libre est comprise entre 2 et 10 % (mole).

13. Composition selon les revendications 1. A 12., caractérisée par le fait que les particules sont issues de particules ayant subi une épipolymérisation.

14. Composition selon les revendications 1. A 13., caractérisée par le fait que la teneur en émulsifiant est au plus égale à 2 %, avantageusement au plus égale à 1 %.

15. Composition selon les revendications 1. A 14., caractérisée par le fait qu'elle comporte en plus une population B de particules porteuses de fonction(s) isocyanate(s).

16. Composition selon la revendication 15., caractérisée par le fait que lesdites fonctions isocyanates sont masquées.

17. Composition selon les revendications 15. Et 16., caractérisée par le fait que la teneur en fonction isocyanate est comprise entre 0,5 et 1 milliéquivalent/gramme de particules de population B.

18. Composition selon les revendications 15. A 17., caractérisée par le fait que le rapport en masse des populations A et B est tel que le rapport entre les fonctions alcools et les fonctions isocyanates soit compris entre 1/10ème et 10, avantageusement entre 0,3 et 5.

19. Composition selon les revendications 15. A 18., caractérisée par le fait que la population B constitue avec la phase aqueuse une émulsion.

20. Composition selon les revendications 15. A 19., caractérisée par le fait que la population B constitue avec la phase aqueuse un latex.

21. Composition selon les revendications 15. A 20., caractérisée par le fait que les populations A et B sont confondues pour constituer une population de particules comportant à la fois des fonctions carboxyliques libres, des fonctions alcools libres et des fonctions isocyanates masquées.

22. Composition selon la revendication 21., caractérisée par le fait que le rapport (équivalent) entre les fonctions isocyanates masquées et alcool est compris entre 0,1 et 10.

23. Composition selon les revendications 21. Et 22., caractérisée par le fait que le rapport(équivalent) entre les fonctions alcools et les fonctions carboxyliques est compris entre 0,2 et 5.

24. Composition selon les revendications 21. A 23., caractérisée par le fait que le rapport (équivalent) entre les fonctions isocyanates et carboxyliques est compris entre 0,1 et 10.

25. Composition selon les revendications 1. A 24., caractérisée par le fait qu'elle comporte en outre des pigments.

26. Composition selon les revendications 1. A 25., caractérisée par le fait que ladite phase aqueuse présente un pH compris entre 4 et 9.

27. Utilisation des compositions selon les revendications 1. A 26. Pour fabriquer des revêtements.

28. Procédé de préparation d'un revêtement caractérisé par le fait qu'il comporte l'étape d'application sur un support d'une composition selon les revendications 1. A 26.

29. Procédé selon la revendication 28., caractérisée par le fait que lesdites compositions comportent au moins une fonction isocyanate masquée et par le fait qu'elles comportent une étape de cuisson à une température comprise entre 120 et 200°C.

## Patentansprüche

1. Für Anstrichmittel und Lacke geeignete Zusammensetzung, gebildet aus einer Dispersion, umfassend mindestens eine wäßrige Phase und eine Population A von Teilchen von einem oder mehreren (Co)polymer(en), deren Größe zwischen 10 und 1000 nm beträgt, dadurch gekennzeichnet, daß die Teilchen einen Gehalt an zugänglichen Säurefunktionen (vorteilhafterweise Carboxylfunktionen) zwischen 0,2 und 1,2 Milliäquivalent/g Trockensubstanz und einen Gehalt an zugänglichen Alkoholfunktionen zwischen 0,3 und 1,5 Milliäquivalent/g aufweisen.

2. Zusammensetzung nach Anspruch 1, dadurch gekennzeichnet, daß der Gehalt an Latexteilchen zwischen 10 und 80%, vorteilhafterweise zwischen 10 und 60% bezogen auf die Masse liegt.

3. Zusammensetzung nach den Ansprüchen 1 und 2, dadurch gekennzeichnet, daß die Säurefunktionen der Teilchen der Population A schwache Säurefunktionen sind, deren pKa mindestens gleich 2, vorzugsweise 3 beträgt.

4. Zusammensetzung nach den Ansprüchen 1 bis 3, dadurch gekennzeichnet, daß die Dispersität der Population A ([d₉₀-d₁₀]/d₉₀) zwischen 0 und ¼ beträgt.

5. Zusammensetzung nach den Ansprüchen 1 bis 4, dadurch gekennzeichnet, daß die Teilchen des oder der (Co)polymeren aus einer Copolymerisation zwischen mindestens einer freien Säure, die eine aktivierte ethylenische Bindung aufweist, und mindestens einem freien Alkohol, der eine aktivierte ethylenische Funktion aufweist, stammen.

6. Zusammensetzung nach den Ansprüchen 1 bis 5, dadurch gekennzeichnet, daß die Masse des (Co)polymers zwischen 5·10⁴ und 5·10⁶ liegt.

7. Zusammensetzung nach den Ansprüchen 5 bis 6, dadurch gekennzeichnet, daß der eine aktivierte ethylenische Funktion aufweisende freie Alkohol ein durch eine α-ethylenische Säure einfach verestertes Diol ist.

8. Zusammensetzung nach den Ansprüchen 1 bis 7, dadurch gekennzeichnet, daß der Gehalt an dem Motiv, das von dem Monomer, das durch den eine aktivierte ethylenische Funktion aufweisenden freien Alkohol gebildet wird, stammt, zwischen 3 und 15%, vorteilhafterweise zwischen 4 und 10% beträgt.

9. Zusammensetzung nach den Ansprüchen 7 und 8, dadurch gekennzeichnet, daß das Diol ein ω/ω'-Diol, vorteilhafterweise ausgewählt aus 1,3-Propandiol und Glykol, ist.

10. Zusammensetzung nach den Ansprüchen 7 bis 9, dadurch gekennzeichnet, daß die α-ethylenische Säure eine gegebenenfalls substituierte Acrylsäure ist.

11. Zusammensetzung nach den Ansprüchen 5 bis 10, dadurch gekennzeichnet, daß die freie Säure eine gegebenenfalls monosubstituierte Acrylsäure oder eines von deren Salzen ist.

12. Zusammensetzung nach den Ansprüchen 5 bis 11, dadurch gekennzeichnet, daß der Gehalt an dem von einer freien Carbonsäure stammenden Motiv zwischen 2 und 10 mol-% beträgt.

13. Zusammensetzung nach den Ansprüchen 1 bis 12, dadurch gekennzeichnet, daß die Teilchen von Teilchen stammen, die einer Epipolymerisation unterzogen worden sind.

14. Zusammensetzung nach den Ansprüchen 1 bis 13, dadurch gekennzeichnet, daß der Gehalt an Emulgiermittel höchstens 2%, vorteilhafterweise höchstens 1% beträgt.

15. Zusammensetzung nach den Ansprüchen 1 bis 14, dadurch gekennzeichnet, daß sie darüberhinaus eine Population B von Trägerteilchen mit einer oder mehreren Funktion(en) von einem oder mehreren Isocyanat(en) umfaßt.

16. Zusammensetzung nach Anspruch 15, dadurch gekennzeichnet, daß die Isocyanatfunktionen maskiert sind.

17. Zusammensetzung nach den Ansprüchen 15 und 16, dadurch gekennzeichnet, daß der Gehalt an Isocyanatfunktion zwischen 0,5 und 1 Milliäquivalent/g Teilchen der Population B beträgt.

18. Zusammensetzung nach den Ansprüchen 15 bis 17, dadurch gekennzeichnet, daß das Massenverhältnis der Populationen A und B dergestalt ist, daß das Verhältnis zwischen den Alkoholfunktionen und den Isocyanatfunktionen zwischen 1/10 und 10, vorteilhafterweise zwischen 0,3 und 5 beträgt.

19. Zusammensetzung nach den Ansprüchen 15 bis 18, dadurch gekennzeichnet, daß die Population B mit der wäßrigen Phase eine Emulsion bildet.

20. Zusammensetzung nach den Ansprüchen 15 bis 19, dadurch gekennzeichnet, daß die Population B mit der wäßrigen Phase einen Latex bildet.

21. Zusammensetzung nach den Ansprüchen 15 bis 20, dadurch gekennzeichnet, daß die Populationen A und B vermischt sind, um eine Population von Teilchen zu bilden, die zugleich freie Carboxylfunktionen, freie Alkoholfunktionen und maskierte Isocyanatfunktionen umfaßt.

22. Zusammensetzung nach Anspruch 21, dadurch gekennzeichnet, daß das (Äquivalent)Verhältnis zwischen den maskierten Isocyanatfunktionen und Alkohol zwischen 0,1 und 10 beträgt.

23. Zusammensetzung nach den Ansprüchen 21 und 22, dadurch gekennzeichnet, daß das (Äquivalent)Verhältnis zwischen den Alkoholfunktionen und den Carboxylfunktionen zwischen 0,2 und 5 beträgt.

24. Zusammensetzung nach den Ansprüchen 21 bis 23, dadurch gekennzeichnet, daß das (Äquivalent)Verhältnis zwischen den Isocyanatfunktionen und den Carboxylfunktionen zwischen 0,1 und 10 beträgt.

25. Zusammensetzung nach den Ansprüchen 1 bis 24, dadurch gekennzeichnet, daß sie darüber hinaus Pigmente enthält.

26. Zusammensetzung nach den Ansprüchen 1 bis 25, dadurch gekennzeichnet, daß die wäßrige Phase einen pH-Wert zwischen 4 und 9 aufweist.

27. Verwendung der Zusammensetzungen nach den Ansprüchen 1 bis 26 zur Herstellung von Beschichtungen.

28. Verfahren zur Herstellung einer Beschichtung, dadurch gekennzeichnet, daß es die Stufe des Aufbringens einer Zusammensetzung nach den Ansprüchen 1 bis 26 auf einen Träger umfaßt.

29. Verfahren nach Anspruch 28, dadurch gekennzeichnet, daß die Zusammensetzungen mindestens eine maskierte Isocyanatfunktion umfassen und daß sie eine Aushärtungsstufe bei einer Temperatur zwischen 120 und 200°C beinhalten.

## Claims

1. Composition which can be used for paint and varnish, made up of a dispersion comprising at least one aqueous phase and a population A of particles of (co)-polymer(s) whose size is between 10 and 1000 nanometres, characterized in that the particles have an accessible acidic (advantageously carboxylic) functional group content of between 0.2 and 1.2 milliequivalents/gram of solid matter and that they have an accessible alcoholic functional group content of between 0.3 and 1.5 milliequivalents/gram.

2. Composition according to Claim 1, characterized in that the content of latex particles is between 10 and 80 %, advantageously between 10 and 60 % on a mass basis.

3. Composition according to Claims 1 and 2, characterized in that the acidic functional groups of the particles of the population A are weak acidic functional groups whose pKₐ is at least 2, preferably 3.

4. Composition according to Claims 1 to 3, characterized in that the dispersity of the population A ([d₉₀ - d₁₀]/d₉₀) is between 0 and 1/4.

5. Composition according to Claims 1 to 4, characterized in that the (co)polymer particles originate from a copolymerization between at least one free acid containing an activated ethylenic bond and at least one free alcohol containing an activated ethylenic functional group.

6. Composition according to Claims 1 to 5, characterized in that the (co)polymer mass is between 5 × 10⁴ and 5 × 10⁶.

7. Composition according to Claims 5 to 6, characterized in that the said free alcohol containing an activated ethylenic functional group is a diol mono-esterified with an alpha-ethylenic acid.

8. Composition according to Claims 1 to 7, characterized in that the content of the unit originating from the monomer consisting of the said free alcohol containing an activated ethylenic functional group is between 3 and 15 %, advantageously between 4 and 10 %.

9. Composition according to Claims 7 and 8, characterized in that the said diol is an omega/omega prime diol advantageously chosen from 1,3-propanediol and glycol.

10. Composition according to Claims 7 to 9, characterized in that the said alpha-ethylenic acid is an optionally substituted acrylic acid.

11. Composition according to Claims 5 to 10, characterized in that the said free acid is an optionally monosubstituted acrylic acid or one of its salts.

12. Composition according to Claims 5 to 11, characterized in that the content of unit originating from a free carboxylic acid is between 2 and 10 % (mole).

13. Composition according to Claims 1 to 12, characterized in that the particles originate from particles which have undergone an epipolymerization.

14. Composition according to Claims 1 to 13, characterized in that the emulsifier content is at most 2 %, advantageously at most 1 %.

15. Composition according to Claims 1 to 14, characterized in that it additionally comprises a population B of particles bearing isocyanate functional group(s).

16. Composition according to Claim 15, characterized in that the said isocyanate functional groups are masked.

17. Composition according to Claims 15 and 16, characterized in that the isocyanate functional group content is between 0.5 and 1 milliequivalent/gram of particles of population B.

18. Composition according to Claims 15 to 17, characterized in that the mass ratio of the populations A and B is such that the ratio of the alcohol functional groups to the isocyanate functional groups is between 1/10th and 10, advantageously between 0.3 and 5.

19. Composition according to Claims 15 to 18, characterized in that the population B constitutes an emulsion with the aqueous phase.

20. Composition according to Claims 15 to 19, characterized in that the population B constitutes a latex with the aqueous phase.

21. Composition according to Claims 15 to 20, characterized in that the populations A and B coincide to constitute a population of particles containing free carboxylic functional groups, free alcohol functional groups and masked isocyanate functional groups at the same time.

22. Composition according to Claim 21, characterized in that the ratio (equivalent) of the masked isocyanate to the alcohol functional groups is between 0.1 and 10.

23. Composition according to Claims 21 and 22, characterized in that the ratio (equivalent) of the alcohol functional groups to the carboxylic functional groups is between 0.2 and 5.

24. Composition according to Claims 21 to 23, characterized in that the ratio (equivalent) of the isocyanate to the carboxylic functional groups is between 0.1 and 10.

25. Composition according to Claims 1 to 24, characterized in that it additionally comprises pigments.

26. Composition according to Claims 1 to 25, characterized in that the said aqueous phase has a pH of between 4 and 9.

27. Use of the compositions according to Claims 1 to 26, for manufacturing coatings.

28. Process for the preparation of a coating, characterized in that it comprises the stage of application onto a support of a composition according to Claims 1 to 26.

29. Process according to Claim 28, characterized in that the said compositions contain at least one masked isocyanate functional group and in that they comprise a stage of curing at a temperature of between 120 and 200°C.
